# EUROPÄISCHE PATENTSCHRIFT

(11) **EP 3 657 138 B1**
(45) Veröffentlichungstag und Bekanntmachung des Hinweises auf die Patenterteilung: **29.09.2021**
(21) Anmeldenummer: 19206978.9
(22) Anmeldetag: 04.11.2019
(51) Int. Cl.: G01F 1/66

(54) **VERFAHREN ZUM BETRIEB EINER MESSEINRICHTUNG UND MESSEINRICHTUNG**
METHOD FOR OPERATING A MEASURING DEVICE AND MEASURING DEVICE
PROCÉDÉ DE FONCTIONNEMENT D'UN DISPOSITIF DE MESURE ET DISPOSITIF DE MESURE

(30) Priorität: 22.11.2018 DE 102018009199
(43) Veröffentlichungstag der Anmeldung: 27.05.2020
(73) Patentinhaber: Diehl Metering GmbH, 91522 Ansbach (DE)
(72) Erfinder: Benkert, Andreas, 91522 Ansbach (DE); Mayle, Michael, 91522 Ansbach (DE); Ploß, Peter, 95445 Bayreuth (DE)
(74) Vertreter: Diehl Patentabteilung

(56) Entgegenhaltungen:
- WO-A2-2010/034713
- DE-A1-102013 101 950
- DE-A1-102017 004 038
- US-A1- 2009 016 555

## Beschreibung

Die Erfindung betrifft ein Verfahren zum Betrieb einer Messeinrichtung, insbesondere eines Durchflusszählers, die ein Messrohr, das zur Aufnahme oder Führung eines Fluids dient, einen an einer oder einer jeweiligen Seitenwand des Messrohrs angeordneten ersten und zweiten Schwingungswandler und eine Steuereinrichtung aufweist. Daneben betrifft die Erfindung eine Messeinrichtung, insbesondere einen Durchflusszähler.

Eine Möglichkeit einen Durchfluss durch ein Messrohr zu messen, sind Ultraschallzähler. Bei diesen wird wenigstens ein Ultraschallwandler genutzt, um eine Ultraschallwelle in das durch das Messrohr strömende Fluid einzukoppeln, wobei diese auf einem geraden Weg oder nach mehreren Reflektionen an Wänden oder speziellen Reflektionselementen zu einem zweiten Ultraschallwandler geführt wird. Aus der Laufzeit der Ultraschallwelle zwischen den Ultraschallwandlern bzw. zwischen einem Laufzeitunterschied bei einer Vertauschung von Sender und Empfänger kann eine Durchflussgeschwindigkeit durch das Messrohr bestimmt werden.

Die Druckschrift DE 10 2017 004038 A1 offenbart ein Verfahren zum Betrieb einer Messeinrichtung mit zwei an einem Messrohr angeordneten Schwingungswandlern sowie eine Möglichkeit der modenselektiven Anregung der beiden Schwingungswandler, wobei die modenselektive Anregung der beiden Schwingungswandler nicht sequentiell erfolgt.

Aus der Druckschrift WO 2010/034713 A2 ist es bekannt, Lamb-Wellen in eine Seitenwand eines Messrohrs einzukoppeln, die von dort in das Fluid abgestrahlt werden und zur Vermessung von Fluideigenschaften genutzt werden. Hierbei ist es bekannt, dass bei der Anregung von Lamb-Wellen mit einer bestimmten Frequenz mehrere Schwingungsmoden anregbar sind. In der genannten Druckschrift wird ausgenutzt, dass die verschiedenen angeregten Wellenmoden voneinander unterschiedliche Laufzeiten aufweisen, sodass bei einer entsprechenden Ausgestaltung des Messaufbaus Messsignale, die aus dem Empfang der verschiedenen Moden resultieren, separat verarbeitet werden können, um physikalische oder chemische Eigenschaften des im Messrohr geführten Mediums zu ermitteln.

Problematisch ist hierbei, dass insbesondere dann, wenn die geführte Welle über relativ kurze Strecken in der Rohrwand geführt wird, häufig keine robuste Separierung der Messsignale für die verschiedenen Moden möglich ist oder diese nur durch komplexe Algorithmen möglich ist, was einerseits die erforderliche Rechenleistung zur Messdatenauswertung erhöht und andererseits potenziell zusätzliche Artefakte oder andere Fehler in den Messdaten erzeugen kann.

Der Erfindung liegt somit die Aufgabe zugrunde, eine demgegenüber robustere bzw. weniger rechenaufwändige Möglichkeit aufzufinden, um in Durchflusszählern oder ähnlichen Messeinrichtungen zusätzliche Informationen über Eigenschaften des Fluids bzw. einen Zustand der Messeinrichtung zu gewinnen.

Die Aufgabe wird erfindungsgemäß durch ein Verfahren der eingangs genannten Art gelöst, wobei die Steuereinrichtung für eine erste Messeinrichtung den ersten Schwingungswandler zeitlich nacheinander zur jeweils modenselektiven Anregung einer ersten und einer zweiten Schwingungsmode einer in der Seitenwand des Messrohrs geführten Welle ansteuert und für eine zweite Messrichtung den zweiten Schwingungswandler zeitlich nacheinander zur jeweils modenselektiven Anregung einer ersten und einer zweiten Schwingungsmode einer in der Seitenwand des Messrohrs geführten Welle ansteuert, wobei die angeregten Wellen jeweils direkt in der Seitenwand oder indirekt über das Fluid zu dem jeweils anderen Schwingungswandler geführt und dort zur Ermittlung von jeweiligen Messdaten für die jeweilige Messrichtung und Schwingungsmode erfasst werden, wobei durch die Steuereinrichtung eine eine Eigenschaft des Fluids oder einen Zustand der Messeinrichtung betreffende Ergebnisinformation aus den Messdaten für beide Messrichtungen und beide jeweilige Schwingungsmoden ermittelt wird.

Erfindungsgemäß wird somit vorgeschlagen, statt einer gemeinsamen Anregung von mehreren Moden die verschiedenen Moden sequenziell nacheinander modenselektiv anzuregen. Unter einer modenselektiven Anregung ist hierbei insbesondere eine modenreine bzw. im Wesentlichen modenreine Anregung zu verstehen. Insbesondere kann bei einer modenselektiven Anregung der ersten Mode die Amplitude dieser Mode um wenigstens den Faktor 3 oder 10 oder 100 oder vorzugsweise um einen erheblich größeren Faktor größer als die Amplitude der zweiten Mode bzw. aller anderen angeregten Schwingungsmoden sein und umgekehrt. Anders ausgedrückt erfolgt die modenselektive Anregung für die erste Schwingungsmode in einem ersten Zeitintervall und die modenselektive Anregung der zweiten Schwingungsmode in einem nicht mit dem ersten Zeitintervall überlappenden zweiten Zeitintervall. Insbesondere können die beiden Zeitintervalle voneinander beabstandet sein und zwischen ihnen kann beispielsweise eine Anregung für die Messung in die andere Messrichtung erfolgen, wie später noch genauer erläutert werden wird.

Dadurch, dass die Schwingungsmoden zu unterschiedlichen Zeiten modenselektiv angeregt werden, kann sichergestellt werden, dass ein Empfang der jeweiligen abgestrahlten Welle für die verschiedenen Schwingungsmoden in ausreichendem Zeitabstand erfolgt, womit eine problemlose Trennung der Messsignale möglich ist. Möglichkeiten zur modenselektiven bzw. hochgradig modenreinen Anregung werden später noch genauer erläutert werden. Ergänzend zur modenselektiven Anregung ist es auch möglich, den jeweils empfangenden Schwingungswandler so zu konfigurieren, dass er einen modenselektiven Empfang durchführt, also dass Signale, die aus einer nicht gewünschten Mode resultieren, weitgehend unterdrückt werden. Da durch die erfindungsgemäß genutzte modenselektive Anregung der Empfang der verschiedenen Moden in deutlichem zeitlichen Abstand erfolgen kann, ist auch ein solcher modenselektiver Empfang problemlos möglich, wie später noch genauer erläutert werden wird.

Dadurch, dass im Rahmen des erfindungsgemäßen Verfahrens zumindest vier Sätze von separaten Messdaten erfasst werden, nämlich jeweils ein Satz Messdaten für die erste Messrichtung und die erste Schwingungsmode, für die erste Messrichtung und die zweite Schwingungsmode, für die zweite Messrichtung und die erste Schwingungsmode und für die zweite Messrichtung und die zweite Schwingungsmode, liegen erheblich mehr Daten vor, als bei üblichen Durchflussmessungen, sodass als Ergebnisinformation insbesondere Informationen zu Diagnosezwecken bzw. Informationen, die potenziell eine Messgenauigkeit verbessern können, ermittelt werden können. Die Ergebnisinformation soll somit insbesondere keine Eigenschaft der Fluidströmung, also beispielsweise eine Durchflussmenge, eine Durchflussgeschwindigkeit oder ein Strömungsprofil, betreffen, sondern eine Eigenschaft des Fluids selbst, also insbesondere eine chemische oder physikalische Eigenschaft. Beispielsweise kann die Ergebnisinformation eine Temperatur, einen insbesondere statischen Druck oder eine Zusammensetzung des Fluids betreffen. Hierbei können absolute Größen, also beispielsweise direkt die Temperatur bzw. der Druck des Fluids, ermittelt werden oder es können beispielsweise Abweichungen von einem gegebenen Referenzwert ermittelt werden bzw. es kann ermittelt werden, ob die entsprechende Eigenschaft innerhalb eines vorgegebenen Sollbereichs liegt oder nicht.

Die Ergebnisinformation kann auch den Zustand der Messeinrichtung selbst betreffen, also beispielsweise in wie weit Ablagerungen in dem Messrohr vorhanden sind. Hierbei kann die Ergebnisinformation qualitativ angeben, in wie weit ein normaler Betriebszustand vorliegt. Beispielsweise kann als Ergebnisinformation ermittelt werden, dass die Messeinrichtung betriebsbereit ist, dass innerhalb eines bestimmten Intervalls eine Wartung erfolgen sollte, oder dass der Zustand der Messeinrichtung zu starken Messfehlern führen kann, womit ein weiterer Betrieb unterbleiben sollte. Alternativ oder ergänzend können jedoch auch spezifische Eigenschaften, beispielsweise ein Grad der Zusetzung des Messrohrs durch Ablagerungen oder Ähnliches, ermittelt werden.

Als erste und zweite Schwingungsmode können Schwingungsmoden mit gleicher Frequenz angeregt werden. Die erste und zweite Schwingungsmode können insbesondere Schwingungsmoden einer Lamb-Welle sein. Die Anregungsfrequenz kann vorzugsweise so gewählt werden, dass genau zwei Schwingungsmoden, insbesondere genau zwei Schwingungsmoden einer Lamb-Welle, bei dieser Anregungsfrequenz anregbar sind. Eine entsprechende Frequenz kann aus der Dispersionsrelation der Seitenwand ermittelt werden, die beispielsweise theoretisch berechnet oder gemessen werden kann. Bei einer Anregung von Lamb-Wellen kann die Anregungsfrequenz so gewählt werden, dass genau eine asymmetrische und genau eine symmetrische Schwingungsmode angeregt werden kann. Wie später noch erläutert werden wird, kann durch eine entsprechende Wahl der Anregungsgeometrie insbesondere gezielt eine der bei einer bestimmten Frequenz anregbaren Moden unterdrückt werden, sodass die verbleibende Mode im Wesentlichen modenrein mit sehr hohem Signal-zu-Rauschverhältnis angeregt werden kann.

In dem erfindungsgemäßen Verfahren erfolgt zunächst eine modenselektive Anregung der ersten Schwingungsmode durch den ersten und zweiten Schwingungswandler und eine Erfassung von Messwerten für die erste Schwingungsmode für beide Messrichtungen und danach eine modenselektive Anregung der zweiten Schwingungsmode durch den ersten und zweiten Schwingungswandler und eine Erfassung von Messwerten für die zweite Schwingungsmode für beide Messrichtungen. Hierdurch kann der Zeitabstand zwischen Messungen mit gleicher Schwingungsmode und unterschiedlicher Messrichtung minimiert werden und hierdurch der Einfluss von Veränderungen einer Fluidströmung im Messbereich minimiert werden. Es wurde erkannt, dass bei einem derartigen Ablauf der Messung Eigenschaften des Fluids selbst bzw. Informationen über den Zustand der Messeinrichtung mit besonders hoher Genauigkeit und besonders geringer Störanfälligkeit ermittelt werden können. Die Messungen für die verschiedenen Messrichtungen können in kurzem zeitlichem Abstand aufeinanderfolgen. Typischerweise sollte jedoch ausreichend lange gewartet werden, dass die Führung der angeregten Welle und evtl. weiterer auf anderen Wegen reflektierter oder gestreuter Wellen zu dem jeweilig empfangenden Schwingungswandler abgeschlossen ist. Dies ist typischerweise nach ungefähr 100 µs der Fall, sodass beispielsweise ein Zeitabstand zwischen 100 µs und 10 ms zwischen den beiden Messungen für unterschiedliche Messungen mit der gleichen Schwingungsmode verwendet werden kann.

Wie bereits eingangs erläutert, kann die Ergebnisinformation eine Temperatur und/oder einen, insbesondere statischen, Druck des Fluids und/oder eine Art und/oder Zusammensetzung des Fluids und/oder das Vorhandensein von Ablagerungen in dem Messrohr betreffen. Für die genannten Größen wurde erkannt, dass sie die Laufzeiten unterschiedlicher Schwingungsmoden bzw. die Empfangsamplituden für unterschiedliche Schwingungsmoden deutlich beeinflussen sodass sie mit dem erfindungsgemäßen Verfahren gut erfassbar sind.

Die jeweiligen Messdaten können eine jeweilige Signallaufzeit der jeweiligen Schwingungsmode für die jeweilige Messrichtung zwischen den Schwingungswandlern und/oder eine Empfangsamplitude für die jeweilige Schwingungsmode und Messrichtung betreffen. Für die erste und zweite Schwingungsmode kann jeweils ein Unterschied der Signallaufzeit zwischen der ersten und zweiten Messrichtung ermittelt werden, wobei die Ergebnisinformation in Abhängigkeit der Differenz oder des Verhältnisses dieser Unterschiede der Signallaufzeit ermittelt wird. Alternativ oder ergänzend kann die Ergebnisinformation in Abhängigkeit einer Differenz oder eines Verhältnisses der Signallaufzeiten oder Empfangsamplituden zwischen der ersten und der zweiten Schwingungsmode bei gleicher Messrichtung ermittelt wird. Die Ergebnisinformation kann in Abhängigkeit der genannten Informationen bzw. Messdaten beispielsweise anhand einer Lookup-Tabelle oder eines funktionalen Zusammenhangs ermittelt werden, die oder der beispielsweise vorangehend empirisch ermittelt oder im Rahmen eines Maschinenlernens trainiert wurde. Durch Berechnung der genannten Zwischenergebnisse können Einflüsse anderer Größen beispielsweise einer Strömungsgeschwindigkeit oder eines Strömungsprofils, bedarfsgerecht reduziert bzw. eliminiert werden, um von Eigenschaften der Fluidströmung weitgehend unabhängige Ergebnisinformationen zu erhalten.

Die Signallaufzeit hängt insbesondere von der Ausbreitungsgeschwindigkeit der entsprechenden Mode in der Seitenwand des Messrohr bzw. im Fluid ab und zudem vom Ausbreitungspfad und somit insbesondere vom Rayleigh-Winkel, mit dem die geführte Welle in das Fluid eingekoppelt wird. Der Rayleigh-Winkel hängt wiederum von den Schallgeschwindigkeiten im Fluid und in der Seitenwand ab. Anhand der Signalamplitude am empfangenden Schwingungswandler kann beispielsweise eine Dämpfung der Schwingung beim Transport durch das Fluid erfasst werden. Ergänzend oder alternativ ist es auch möglich, Informationen über das Dispersionsverhalten der Messstrecke zu gewinnen, beispielsweise indem Verzerrungen in einer Einhüllenden des Anregungspulses ausgewertet werden oder ähnliches.

Im erfindungsgemäßen Verfahren soll eine modenselektive Anregung bzw. insbesondere eine weitgehend modenreine Anregung einzelner Schwingungsmoden erfolgen, wobei zwischen der Anregung verschiedener Schwingungsmoden umgeschaltet werden soll. Eine Modenselektivität kann beispielsweise durch eine Nutzung von Interdigital-Transducern, oder durch eine Kopplung eines Schwingungswandlers über ein keilförmiges Kopplungselement mit der Seitenwand erreicht werden. Bei solchen Schwingungswandlern ist es jedoch relativ aufwändig, zwischen der Anregung verschiedener Moden zu wechseln. Zwar wäre es prinzipiell möglich, einen Kopplungswinkel zwischen Schwingungswandler und Seitenwand, beispielsweise durch eine entsprechende Aktorik, anzupassen oder zur Anregung der verschiedenen Schwingungsmoden unterschiedliche Interdigital-Transducer zu nutzen. Hieraus resultiert jedoch ein aufwändiger Aufbau der Messeinrichtung und ein solcher Wechsel einer angeregten Mode kann zudem zu einer Beeinflussung der Messgeometrie führen, die bei der Weiterverarbeitung der Messdaten berücksichtigt werden müsste.

Daher ist es vorteilhaft, wenn der erste und/oder der zweite Schwingungswandler jeweils mehrere Schwingelemente umfassen, wobei die modenselektive Anregung der ersten und/oder zweiten Schwingungsmode erfolgt, indem in mehreren voneinander beabstandeten Anregungsbereichen der Seitenwand durch wenigstens eines der Schwingelemente, das mit dem jeweiligen Anregungsbereich schwingungsgekoppelt ist, in der Seitenwand geführte Teilwellen angeregt werden, die sich zu der geführten Welle überlagern, wobei die Schwingelemente derart angesteuert werden, dass die jeweils andere Schwingungsmode durch eine destruktive Interferenz der Teilwellen zumindest teilweise ausgelöscht wird.

Es wird somit vorgeschlagen, die Seitenwand des Messrohrs in mehreren voneinander beabstandeten Anregungsbereichen anzuregen, wobei durch die Nutzung separater Schwingelemente für die einzelnen Anregungsbereiche prinzipiell eine unabhängige Anregung in den Anregungsbereichen möglich ist. Durch Überlagerung der so angeregten Teilwellen wird die Gesamtwelle erzeugt, die anschließend in der Seitenwand geführt und zur Anregung der Kompressionsschwingungen im Fluid genutzt wird. Hierbei werden die geometrische Anordnung der Anregungsbereiche und die jeweiligen Anregungsverläufe derart aufeinander abgestimmt, dass eine zu dämpfende Schwingungsmode durch eine destruktive Interferenz gedämpft wird. Hierbei kann für beide Schwingungswandler vorzugsweise eine Anregung mit der gleichen Frequenz erfolgen, wobei, wie im Folgenden noch genauer erläutert werden wird, durch entsprechende Wahl der Phasenlage der Anregung bzw. der Polaritäten der Anregung und unter Umständen durch eine Abstimmung der Amplitudenverläufe aufeinander gezielt eine modenselektive Anregung erfolgen kann.

Die Schwingelemente können insbesondere piezoelektrische Elemente sein, die vorzugsweise zu Schwingungen senkrecht zur Seitenwand angeregt werden. Die Schwingelemente können insbesondere plattenförmig oder balkenförmig sein und parallel zu der Oberfläche der Seitenwand angeordnet sein.

Der erste bzw. zweite Schwingungswandler können dazu dienen, eine im Wesentlichen ebene Wellenfront der Seitenwand anzuregen. Dies kann beispielsweise dadurch realisiert werden, dass sich die einzelnen Schwingelemente im Wesentlichen über die gesamte Breite der Seitenwand erstrecken oder dass mehrere gemeinsam angesteuerte Schwingelemente gemeinsam einen Anregungsbereich anregen, der sich im Wesentlichen über die gesamte Breite der Seitenwand erstreckt. Die verschiedenen Anregungsbereiche können in diesem Fall in Längsrichtung des Messrohres voneinander beabstandet sein. Der Abstand der Mitten der Anregungsbereiche und die Phasenlage bzw. Polarität der Anregung können dann abgestimmt werden, um die gewollte destruktive Interferenz der nicht gewünschten Schwingungsmode zu erreichen.

Die Schwingungswandler können besonders einfach aufgebaut werden, wenn anhand der bekannten Dispersionsrelation der Seitenwand die Anregungsfrequenz zur Anregung der geführten Wellen so gewählt wird, dass genau zwei Schwingungsmoden anregbar sind, wobei eine langwellige dieser Schwingungsmoden genau die doppelte Wellenlänge aufweist wie die verbleibende kurzwellige dieser Schwingungsmoden. Wird der Abstand der Mitten der Anregungsbereiche nun so gewählt, dass er der Wellenlänge der kurzwelligen Schwingungsmode entspricht, so führt eine Anregung mit gleicher Polarität und Phase in beiden Anregungsbereichen dazu, dass für die kurzwellige Schwingungsmode eine konstruktive Interferenz und für die langwellige Schwingungsmode eine destruktive Interferenz resultiert. Es erfolgt somit eine im Wesentlichen modenreine Anregung der kurzwelligen Schwingungsmode. Erfolgt hingegen eine Anregung mit einem Phasenversatz von 180° bzw. mit umgekehrter Polarität, so resultiert eine destruktive Interferenz für die kurzwellige Schwingungsmode und eine konstruktive Interferenz für die langwellige Schwingungsmode, sodass eine im Wesentlichen modenreine Anregung der langwelligen Schwingungsmode erfolgt. Somit kann im beschriebenen Fall eine optimale konstruktive Interferenz für die modenselektiv anzuregende Schwingungsmode und eine optimale destruktive Interferenz für die nicht gewünschte Schwingungsmode erreicht werden. Die beschriebene optimale destruktive Interferenz kann jedoch auch dann erreicht werden, wenn die Wellenlängen der beiden Schwingungsmoden ein anderes Verhältnis zueinander aufweisen, insbesondere, wen die Phasenlage zwischen den Anregungen in den Anregungsbereichen, beispielsweise mit Hilfe eines Verzögerungsglieds für die Steuersignale, frei wählbar ist. Die Anregungen in den Anregungsbereichen könne stets so aufeinander abgestimmt werden, dass für eine nicht gewünschte Mode stets im Wesentlichen eine vollständig destruktive Interferenz resultiert.

Das beschriebene Vorgehen ist jedoch nicht nur für ebene Wellenfronten möglich. Prinzipiell können beliebig geformte Anregungsbereiche genutzt werden, deren Mitten im Wesentlichen parallel zueinander verlaufen, um das vorangehend beschriebene Ergebnis zu erreichen. Beispielsweise können konzentrische, insbesondere kreis- oder ellipsenförmige Anregungsbereiche genutzt werden, um eine im Wesentlichen isotrope Abstrahlung der gewünschten Schwingungsmode in alle Richtungen zu erreichen. Da eine Gruppe von Schwingelementen, die eine derartige, im Wesentlichen isotrope Abstrahlung realisiert, zumindest in ausreichend großer Entfernung als Punktquelle betrachtet werden kann, können auch mehrere solche Gruppen von Anregungsbereichen in einer Linie oder einer Kurve angeordnet werden, ohne im Fernfeld im Wesentlichen beliebig geformte Wellenfronten auszubilden.

Vorzugsweise werden die gleichen Schwingelemente, die zur Abstrahlung der geführten Welle bzw. der jeweiligen Schwingungsmode genutzt werden, auch genutzt, um Messwerte durch den entsprechenden Schwingungswandler zu erfassen. Hierbei soll besonders bevorzugt ein modenselektiver Empfang genau jener Schwingungsmode durch den empfangenden Schwingungswandler erfolgen, die für die aktuelle Messung durch den anderen Schwingungswandler angeregt wurde. Dies kann dadurch erreicht werden, dass Messwerte von Schwingungswandlern, die unterschiedlichen Anregungsbereichen zugeordnet sind, mit einem Vorzeichen und/oder Phasenzusatz und/oder einer Zeitverzögerung zueinander addiert werden, die in Abhängigkeit der gewünschten zu empfangenden Mode vorgegeben werden. Hierdurch wird empfangsseitig bezogen auf die Wellenlänge der empfangenen Mode eine Art Kammfilterung realisiert. Insbesondere könnten die genannten Parameter so gewählt werden, dass sich die Signale der Schwingelemente der verschiedenen Anregungsbereiche für die nicht gewünschte Schwingungsmode gegenseitig wegheben, so dass ein Einfluss dieser Mode auf das Ergebnis im Wesentlichen vollständig unterdrückt wird.

Die Anregung der Schwingelemente kann derart erfolgen, dass die Schwingungsmuster eines ersten und eines zweiten der Schwingelemente einander mit einer vorgegebenen relativen Polarität und/oder einem vorgegebenen relativen Phasenversatz entsprechen, wobei sich die zur modenselektiven Anregung der ersten Schwingungsmode und zur modenselektiven Anregung der zweiten Schwingungsmode genutzten vorgegebenen Polaritäten und/oder Phasenversätze voneinander unterscheiden. Beispielsweise kann das Schwingungsmuster von Schwingelementen eines Anregungsbereichs gegenüber dem Schwingungsmuster für Schwingelemente eines anderen Schwingungsbereichs zum Wechsel der anzuregenden Schwingungsmode invertiert oder mit einem bestimmten Phasenversatz, insbesondere einem Phasenversatz von 180°, beaufschlagt werden. Wie obig erläutert kann somit insbesondere eine destruktive Interferenz der jeweiligen nicht gewünschten Mode erreicht werden.

Zur modenselektiven Anregung der ersten und/oder zweiten Schwingungsmode können ein erstes und ein zweites Schwingelement derart angesteuert werden, dass der zeitliche Verlauf der Schwingungsamplitude des zweiten Schwingelements dem um eine Verzögerungszeit verzögerten zeitlichen Verlauf der Schwingungsamplitude des ersten Schwingelements entspricht. Die Verzögerungszeit kann hierbei vorzugsweise so gewählt werden, dass sie der Laufzeit einer zu bedämpfenden Schwingungsmode, die destruktiv interferieren soll, von dem ersten zu dem zweiten Schwingelement in der Seitenwand entspricht. Diese Laufzeit kann beispielsweise durch eine vorangehende Messung ermittelt oder aus der Dispersionsrelation der Seitenwand bestimmt werden. Wird eine derartige Verzögerungszeit gewählt, können das erste und zweite Schwingelement mit entgegengesetzter Polarität schwingen. Dadurch, dass nicht nur die relative Phasenlage der Schwingungen sondern auch die relative Amplitude unter Berücksichtigung der Laufzeit angepasst wird, wird zumindest für eine Abstrahlungsrichtung eine optimale Bedämpfung der nicht gewünschten Schwingungsmode erreicht.

Das beschriebene Verhalten kann beispielsweise dadurch erreicht werden, dass zum Betrieb des ersten und zweiten Schwingelements ein gemeinsames Ansteuersignal genutzt wird, wobei jedoch ein zusätzliches Verzögerungsglied genutzt wird, das das Ansteuersignal des zweiten Schwingelements oder des ersten Schwingelements um eine vorgegebene Verzögerungszeit verzögert. Ein derartiger Aufbau des ersten bzw. zweiten Schwingungswandlers hat zudem den Vorteil, dass die Abstände zwischen den Mitten der Anregungsbereiche bzw. den Schwingelementen im Wesentlichen frei gewählt werden können, wobei ausschließlich eine passende Verzögerungszeit gewählt werden muss. Diese kann problemlos im laufenden Betrieb oder bei einer vorbereitenden Messung ermittelt werden, so dass beispielsweise auch Abweichungen aufgrund von Produktionstoleranzen oder aktuellen Betriebsbedingungen problemlos ausgeglichen werden können.

Ein ähnliches Vorgehen kann auch für eine empfangsseitige Filterung genutzt werden. Messwerte, die von dem ersten bzw. zweiten Schwingungswandler empfangen werden, können zeitlich verzögert werden, bevor sie zu den Messwerten des ersten bzw. zweiten Schwingungswandlers addiert bzw. von diesen subtrahiert werden. Somit kann auf einfache Weise eine empfangsseitige Modenselektivität realisiert werden.

Für wenigstens eine der Messrichtungen kann eine weitere Mode der in der Seitenwand des Messrohrs geführten Welle modenselektiv durch einen der Schwingungswandler angeregt und direkt in der Seitenwand oder indirekt über das Fluid zu dem anderen Schwingungswandler geführt und dort zur Ermittlung von weiteren Messdaten für die weitere Schwingungsmode erfasst werden, wobei die Schwingungsfrequenz der weiteren Mode sich von der Schwingungsfrequenz der ersten und/oder zweiten Mode unterscheidet, wobei die Ergebnisinformation in Abhängigkeit der weiteren Messdaten ermittelt wird. Die weitere Schwingungsmode wird in einem separaten Zeitintervall anreget, das heißt also beispielsweise vor oder nach der Anregung der ersten und zweiten Mode oder zwischen den Zeitintervallen innerhalb derer die erste bzw. zweite Mode angeregt wird. Da zur Anregung der weiteren Schwingungsmode eine andere Frequenz genutzt wird, ist es typischerweise nicht mehr möglich, alleine durch eine entsprechende Wahl der Abstände der Anregungsbereiche und der Polarität der Anregung eine modenreihe Anregung der ersten, der zweiten und der weiteren Mode zu erreichen. Es ist daher insbesondere, wenn die weitere Mode genutzt werden soll, vorteilhaft, wenn die Phasenlage der Anregung in den Anregungsbereichen frei oder in mehr als zwei Stufen gewählt werden kann. Dies kann beispielsweise durch das obig erläuterte Verzögerungsglied erreicht werden oder dadurch, dass für die Schwingungswandler separate Ansteuersignale generiert werden. Durch die Nutzung der weiteren Mode stehen zusätzliche Informationen über das Verhalten der Messeinrichtung bzw. des Fluids zur Verfügung.

Hierdurch kann beispielsweise ein weiterer Bereich einer Dispersionsrelation abgetastet werden. Somit kann die Ergebnisinformation mit höherer Zuverlässigkeit und Genauigkeit ermittelt werden.

Die Ergebnisfunktion kann durch einen Algorithmus aus den Messdaten ermittelt werden, der durch ein Verfahren des Maschinenlernens trainiert ist oder wird. Dies kann insbesondere vorteilhaft sein, wenn als Messdaten für die wenigstens vier im Rahmen des erfindungsgemäßen Verfahrens durchgeführten Messungen nicht nur jeweils ein einzelner Wert, beispielsweise eine Signallaufzeit oder eine Signalamplitude, erfasst werden, sondern mehrere Werte, beispielsweise die Signallaufzeit und die Amplitude, oder gar der gesamte erfasste Schwingungsverlauf ausgewertet werden soll. In diesem Fall kann der Zusammenhang der einzelnen Messdaten mit der gewünschten Ergebnisinformation, also beispielsweise einer Temperatur oder einer Zusammensetzung des Fluids oder dem Vorhandensein bzw. der Menge von Ablagerungen im Messrohr, nicht unmittelbar theoretisch herleitbar sein und auch nicht ohne weiteres an ersten Testmessungen erkennbar sein. Es kann daher vorteilhaft sein, den zur Ermittlung der Ergebnisinformationen genutzten Algorithmus derart zu trainieren, dass er entsprechende Zusammenhänge selbst erkennt.

Dies kann beispielsweise möglich sein, wenn in vorbereitenden Messungen zur Bereitstellung eines Trainingsdatensatzes die gewünschte Ergebnisinformation bereits bekannt ist oder anderweitig ermittelt wird. Beispielsweise können eine Vielzahl von Trennungsmessungen mit unterschiedlichen bekannten Fluidtemperaturen bzw. Zusammensetzungen und/oder unterschiedlichen Mengen von Ablagerungen im Messrohr durchgeführt werden. Diese bekannten Parameter können gemeinsam mit den Messdaten einen Trainingsdatensatz bilden, der im Rahmen eines überwachten Lernens des Algorithmus genutzt werden kann. Wird beispielsweise ein neuronales Netz trainiert, kann zum Training der aus anderen Anwendungsbereichen bekannte Ansatz der Backpropagation of Error genutzt werden, bei dem die Messdaten durch das neuronale Netz verarbeitet werden und Abweichungen des Ergebnisses von den aus dem Trainingsdatensatz bekannten, gewünschten Ergebnisinformationen durch Minimierung einer Kostenfunktion reduziert werden.

Alternativ ist es jedoch auch möglich, den Algorithmus zur Ermittlung der Ergebnisinformation vorzugeben, indem beispielsweise theoretisches Vorwissen über die Auswirkungen von Eigenschaften des Fluids auf Signallaufzeiten, Amplituden oder Ähnliches genutzt wird oder vorangehende Testmessungen statistisch ausgewertet werden.

Neben dem erfindungsgemäßen Verfahren betrifft die Erfindung eine Messeinrichtung, insbesondere einen Durchflusszähler, mit einem Messrohr, das zur Aufnahme oder zur Führung eines Fluids dient, einem an einer oder einer jeweiligen Seitenwand des Messrohrs angeordneten ersten und zweiten Schwingungswandler und einer Steuereinrichtung, wobei die Steuereinrichtung zur Durchführung des erfindungsgemäßen Verfahrens eingerichtet ist. Die Messeinrichtung bzw. insbesondere die Schwingungswandler der Messeinrichtung können zudem mit den zum erfindungsgemäßen Verfahren erläuterten Merkmalen mit den dort genannten Vorteilen weitergebildet werden.

Weitere Vorteile und Einzelheiten der Erfindung ergeben sich aus den im Folgenden beschriebenen Ausführungsbeispielen und den zugehörigen Zeichnungen. Hierbei zeigen schematisch:
- Fig. 1 und 2: verschiedene Ansichten eines Ausführungsbeispiels einer erfindungsgemäßen Messeinrichtung, durch die ein Ausführungsbeispiel des erfindungsgemäßen Verfahrens ausführbar ist,
- Fig. 3: ein Ablaufdiagramm eines Ausführungsbeispiels des erfindungsgemäßen Verfahrens, und
- Fig. 4: eine Detailansicht eines weiteren Ausführungsbeispiels einer erfindungsgemäßen Messeinrichtung.

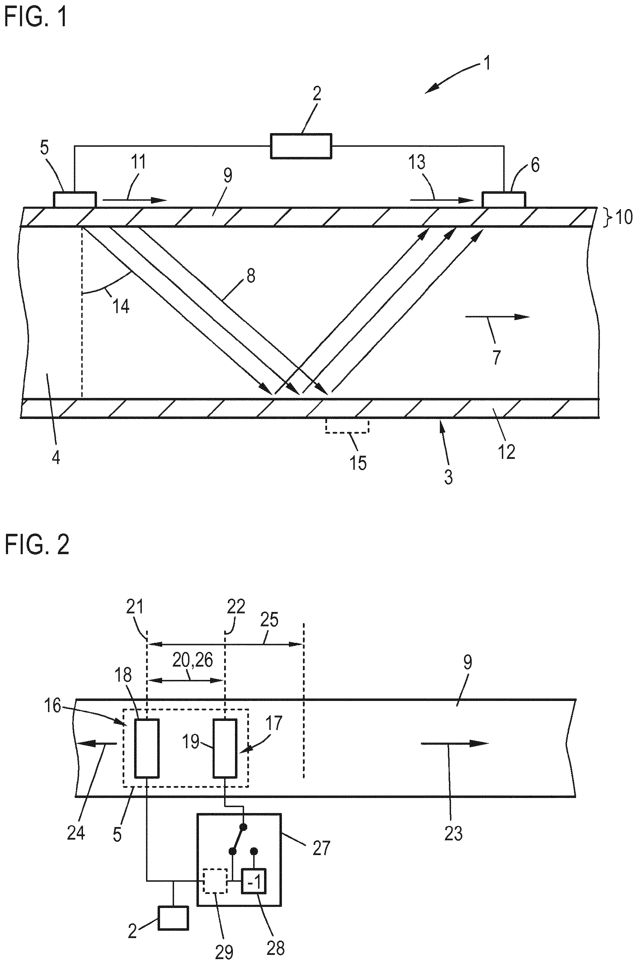

Fig. 1 zeigt eine Messeinrichtung 1 zur Ermittlung einer ein Fluid und/oder eine Fluidströmung betreffenden Fluidgröße, insbesondere eines Durchflussvolumens. Wie später noch genauer erläutert werden wird, ist die Messeinrichtung 1 zusätzlich dazu eingerichtet, eine Ergebnisinformation zu ermitteln, die das Fluid selbst und/oder den Zustand der Messeinrichtung 1 betrifft. Das Fluid wird in eine durch den Pfeil 7 gezeigte Richtung durch einen Innenraum 4 eines Messrohrs 3 geführt. Um die Fluidgröße, insbesondere das Durchflussvolumen, zu ermitteln, kann durch die Steuereinrichtung 2 eine Laufzeitdifferenz zwischen den Laufzeiten von einem ersten Schwingungswandler 5 zu einem zweiten Schwingungswandler 6 und umgekehrt ermittelt werden. Hierbei wird ausgenutzt, dass diese Laufzeit von einer Geschwindigkeitskomponente des Fluids parallel zu einer Ausbreitungsrichtung eines Ultraschallstrahls 8 durch das Fluid abhängt. Aus dieser Laufzeit kann somit eine über den Pfad des jeweiligen Ultraschallstrahls 8 gemittelte Flussgeschwindigkeit in Richtung des jeweiligen Ultraschallstrahls 8 und somit näherungsweise eine gemittelte Strömungsgeschwindigkeit in dem von dem Ultraschallstrahl 8 durchquerten Volumen ermittelt werden.

Um einerseits eine Anordnung der Schwingungswandler 5, 6 außerhalb des Messrohrs 3 zu ermöglichen und andererseits eine Empfindlichkeit bezüglich unterschiedlicher Strömungsgeschwindigkeiten an unterschiedlichen Positionen des Strömungsprofils zu reduzieren, wird durch den ersten Schwingungswandler 5 nicht direkt ein Ultraschallstrahl 8, also eine Druckwelle, in dem Fluid induziert. Stattdessen wird durch den Schwingungswandler 5 eine geführte Welle in der Seitenwand 9 des Messrohrs 3 angeregt. Die Anregung erfolgt mit einer Frequenz, die derart gewählt ist, dass eine Lamb-Welle in der Seitenwand 9 angeregt wird. Solche Wellen können angeregt werden, wenn die Dicke 10 der Seitenwand 9 vergleichbar mit der Wellenlänge der Transversalwelle im Festkörper ist, welche sich aus dem Verhältnis der Schallgeschwindigkeit der Transversalwelle im Festkörper und der angeregten Frequenz ergibt.

Die durch den Schwingungswandler 5 in der Seitenwand 9 angeregte geführte Welle ist schematisch durch den Pfeil 11 dargestellt. Durch die geführte Welle werden Kompressionsschwingungen des Fluids angeregt, die im gesamten Ausbreitungspfad der geführten Welle in das Fluid abgestrahlt werden. Dies ist schematisch durch die in Strömungsrichtung zueinander versetzten Ultraschallstrahlen 8 dargestellt. Die abgestrahlten Ultraschallstrahlen 8 werden an der gegenüberliegenden Seitenwand 12 reflektiert und über das Fluid zurück zu der Seitenwand 9 geführt. Dort regen die auftreffenden Ultraschallstrahlen 8 erneut eine geführte Welle in der Seitenwand 9 an, die schematisch durch den Pfeil 13 dargestellt ist und die durch den Schwingungswandler 6 erfasst werden kann, um die Laufzeit zu bestimmen. Alternativ oder ergänzend ist es möglich, die abgestrahlten Ultraschallwellen über einen Schwingungswandler 15 zu erfassen, der an der Seitenwand 12 angeordnet ist. Im gezeigten Beispiel werden die Ultraschallstrahlen 8 auf ihrem Pfad zum Schwingungswandler 6, 15 nicht bzw. nur einmal an den Seitenwänden 9, 12 reflektiert. Es wäre selbstverständlich möglich, eine längere Messstrecke zu nutzen, wobei die Ultraschallstrahlen 8 mehrfach an den Seitenwänden 9, 12 reflektiert werden.

Zur robusten Erfassung einer Strömungsgeschwindigkeit bzw. eines Durchflussvolumens ist es vorteilhaft, wenn die Schwingungswandler 5, 6 derart ausgebildet sind, dass durch sie geführte Wellen mit genau einer Schwingungsmode einer Lamb-Welle, also beispielsweise ausschließlich eine asymmetrische Lamb-Welle oder ausschließlich eine symmetrische Lamb-Welle angeregt werden können. In diesem Fall werden die Kompressionswellen mit einem Rayleigh-Winkel 14 abgestrahlt, der von der Schallgeschwindigkeit der Kompressionswelle im Fluid und der Schallgeschwindigkeit der in der Seitenwand 9 angeregten Mode abhängt.

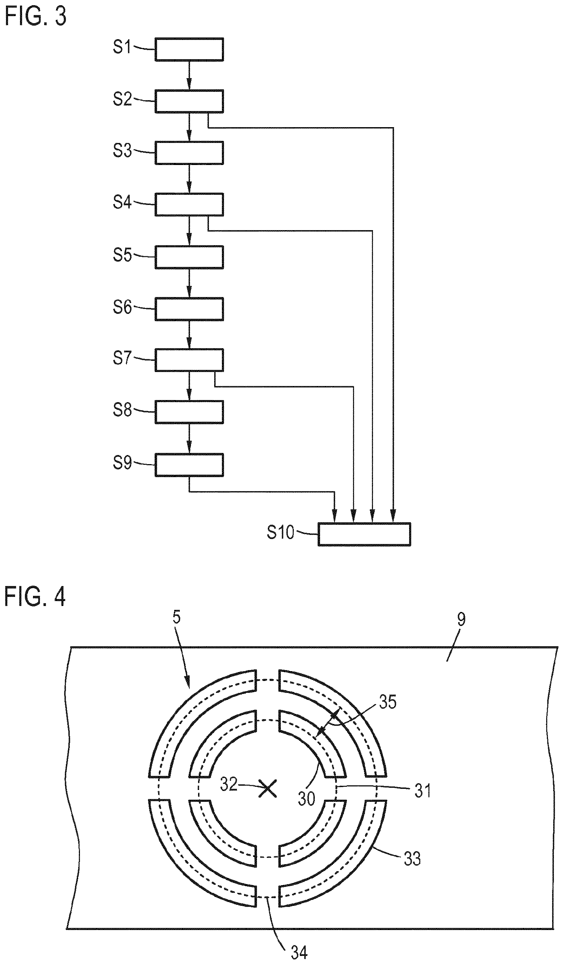

Wie erläutert soll zusätzlich zu der Durchflussgeschwindigkeit bzw. -menge eine weitere Eigenschaft des durch das Messrohr 3 strömenden Fluids, insbesondere eine physikalische oder chemische Eigenschaft, wie eine Temperatur, ein Druck, eine Fluidart oder eine Fluidzusammensetzung, oder eine diagnostische Information bezüglich der Messeinrichtung 1, also beispielsweise wie stark eine Messung durch Ablagerungen im Messrohr 3 beeinflusst wird oder allgemein ob ein Wartungsbedarf besteht, ermittelt werden. Eine Möglichkeit entsprechende Größen zu ermitteln ist es, Schwingungswandler 5, 6 zu verwenden, die wahlfrei verschiedene Schwingungsmoden anregen können. In diesem Fall können insgesamt vier Messungen durchgeführt werden, wobei die Ausbreitungsrichtung der geführten Welle und die zur Messung genutzte Schwingungsmode variiert wird. Eine Ergebnisinformation, also beispielsweise eine der vorangehend genannten Größen, kann dann aus den Messdaten all dieser Messungen ermittelt werden. Ein möglicher Aufbau für den Schwingungswandler 5, der eine derartige wahlweise Modenselektion ermöglicht, ist in Fig. 2 dargestellt. Die Durchführung mehrerer Messungen für verschiedene Messrichtungen und Schwingungsmoden und die gemeinsame Verarbeitung der Messergebnisse wird später mit Bezug auf Fig. 3 diskutiert werden.

Fig. 2 zeigt einen Aufbau des Schwingungswandlers 5, durch den eine im Wesentlichen modenreinen Anregung einer in der Wand 9 geführten Gesamtwelle möglich ist, wobei wahlweise verschiedene Schwingungsmoden angeregt werden können. Der Schwingungswandler 5 umfasst zwei voneinander beabstandete Anregungsbereiche 16, 17 in denen durch ein jeweiliges Schwingelement 18, 19, beispielsweise piezoelektrische Elemente, jeweils in der Wand 9 geführte Teilwellen angeregt werden, die sich zu der Gesamtwelle überlagern. Als Teilwellen werden Lamb-Wellen angeregt. Da die Schwingelemente 18, 19 im Wesentlichen rechteckförmig sind und im gesamten Anregungsbereich 16, 17 mit der Wand gekoppelt sind, werden als Teilwellen im Wesentlichen ebene Wellen angeregt, die durch die Wand 9 in die Ausbreitungsrichtungen 23, 24 geführt werden.

Um eine modenreine Anregung zu realisieren, sind der Abstand 20 zwischen den Mitten 21, 22 der Anregungsbereiche 16, 17, eine durch die Steuereinrichtung 2 vorgegebene Anregungsfrequenz und die relative Phasenlage bzw. Polarität der Anregung derart gewählt, dass eine zu dämpfende Schwingungsmode der Teilwellen durch eine Destruktive Interferenz in die Ausbreitungsrichtungen 23, 24 im Wesentlichen ausgelöscht wird. Eine einfache Möglichkeit, dies zu erreichen, ist es, die Anregungsfrequenz so zu wählen, dass die Wellenlänge 25 der zu dämpfenden Schwingungsmode gemäß der Dispersionsrelation der Wand 9 bei der gewählten Anregungsfrequenz doppelt so lange ist, wie der Abstand zwischen den Mitten 21, 22 der Anregungsbereiche 16, 17. Da die Schwingelemente 18, 19 im Wesentlichen gleich aufgebaut sind und durch die Steuereinrichtung 2 mit einem gemeinsamen Ansteuersignal angesteuert werden, resultiert eine destruktive Interferenz der Teilwellen bezüglich der zu dämpfenden Schwingungsmode, womit diese im Wesentlichen vollständig unterdrückt wird. Wird nun die Anregungsfrequenz derart gewählt, dass ausschließlich zu dämpfende und eine einzige weitere Schwingungsmode angeregt werden, was bei einer bekannten Dispersionsrelation der Wand 9 problemlos möglich ist, so kann eine im Wesentlichen modenreine Anregung der weiteren Schwingungsmode realisiert werden.

Im gezeigten Ausführungsbeispiel ist die Anregungsfrequenz so gewählt, dass die Wellenlänge 26 der weiteren angeregten Schwingungsmode genau halb so lang ist wie die Wellenlänge 25 der zu dämpfenden Schwingungsmode. Hierdurch wird der Vorteil erreicht, dass die in den Anregungsbereichen 16, 17 angeregten Teilwellen bezüglich der weiteren Schwingungsmode konstruktiv interferieren, wodurch diese Schwingungsmode mit einer größeren Amplitude bereitgestellt wird. Werden somit die Schwingelemente 18, 19 mit dem gleichen Ansteuersignal angesteuert, so erfolgt eine modenselektive bzw. im Wesentlichen modenreine Anregung einer Schwingungsmode mit der Wellenlänge 26.

Um eine modenselektive bzw. im Wesentlichen modenreine Anregung auch für eine zweite Schwingungsmode zu ermöglichen, wird eine Schalteinrichtung 27 genutzt, die in Fig.2 als separate Komponente dargestellt ist, jedoch auch die Steuereinrichtung 2 oder in den Schwingungswandler 5 integriert sein kann. Im gezeigten Ausführungsbeispiel wird eine sehr einfach aufgebaute Schalteinrichtung genutzt, die ein Umschalten zwischen dem von der Steuereinrichtung 2 bereitgestellten Eingangssignal und einem durch die Inverterschaltung 28 invertierten Signal ermöglicht. Statt der Nutzung einer Inverterschaltung 28 wäre es beispielsweise auch möglich, die Verschaltung der Elektroden des Schwingelements 19 mit der Steuereinrichtung 2 zu ändern, um die angeregte Mode zu wechseln. Beispielsweise kann zur Anregung der ersten Schwingungsmode das von der Steuereinrichtung 2 bereitgestellte Signal an einer messrohrabgewandten Elektrode des Schwingelements 19 anliegen und die messrohrzugewandte Elektrode kann auf einem Massepotential liegen. Zur Anregung der zweiten Schwingungsmode kann eine umgekehrte Beschaltung genutzt werden. Der resultierende Effekt entspricht weitgehend der Nutzung einer Inverterschaltung 28.

Durch das Invertieren der Beschaltung bzw. des Ansteuersignals schwingt das Schwingelement mit einem Schwingmuster, das eine zum Schwingmuster des Schwingelements 18 umgekehrte Polarität aufweist. Dies führt dazu, dass für die erste Schwingungsmode mit der Wellenlänge 26 eine destruktive Interferenz und für die zweite Schwingungsmode mit der Wellenlänge 25 eine konstruktive Interferenz resultiert, womit eine modenselektive bzw. modenreine Anregung für die zweite Schwingungsmode erfolgt.

Die Modenreinheit kann für die Ausbreitungsrichtung 23 weiter verbessert werden, wenn sichergestellt wird, dass der zeitliche Verlauf der Schwingungsamplitude des zweiten Schwingelements 19 dem um eine Verzögerungszeit verzögerten zeitlichen Verlauf der Schwingungsamplitude des ersten Schwingelements 18 entspricht, wobei die Verzögerungszeit der Laufzeit einer der angeregten Moden von dem ersten Schwingelement 18 zu dem zweiten Schwingelement 19 entspricht. Wird dies nicht sichergestellt, so kann es insbesondere zu Beginn bzw. zum Ende eines Anregungspulses hin zu einer gewissen Modenunreinheit kommen, da aufgrund der Laufzeit zwischen den Schwingelementen 18, 19 und der endlichen Länge des Anregungspulses beispielsweise das Schwingelement 19 weiter schwingen würde, während die vom Schwingelement 18 ausgehende geführte Welle den Bereich dieses Schwingelements bereits passiert hätte.

Eine Möglichkeit, dies mit geringem Aufwand zu erreichen, ist es, zusätzlich das Verzögerungselement 29 vorzusehen, das das von der Steuereinrichtung 2 bereitgestellte Steuersignal um diese Verzögerungszeit verzögert. Wird nun die Verzögerungszeit so gewählt, dass sie der Laufzeit der zu bedämpfenden Schwingungsmode zwischen den Schwingungswandlern 18, 19 entspricht und erfolgt eine invertierte Ansteuerung des Schwingungswandlers 19, so kann unabhängig vom Abstand 20 zwischen den Mitten 21, 22 der Anregungsbereiche 16, 17 sichergestellt werden, dass stets eine im Wesentlichen vollständig destruktive Interferenz für die zu bedämpfende Schwingungsmode für die Ausbreitungsrichtung 23 resultiert, womit eine im Wesentlichen modenreine bzw. modenselektive Anregung für die verbleibende Schwingungsmode resultiert. Die Wahl der anzuregenden Schwingungsmode erfolgt durch Vorgabe der Verzögerungszeit.

Fig. 3 zeigt ein Ablaufdiagramm eines Verfahrens zum Betrieb der Messeinrichtung 1, das es ermöglicht, physikalische oder chemische Eigenschaften des Fluids bzw. den Zustand der Messrichtung zu untersuchen. Hierbei wird zunächst in Schritt S1 der Schwingungswandler 5 durch die Steuereinrichtung 2 angesteuert, um modenselektiv eine erste Schwingungsmode, beispielsweise eine asymmetrische Mode, einer in der Seitenwand 9 geführten Lamb-Welle anzuregen. Die geführte Welle wird direkt oder über das Fluid zum zweiten Schwingungswandler 6 geführt, wo in Schritt S2 Messdaten für diese Messrichtung und die erste Schwingungsmode erfasst werden.

In den Schritten S3 und S4 wird eine entsprechende Messung für eine zweite Messrichtung wiederholt. Hierbei wird in Schritt S3 der Schwingungswandler 6 angesteuert, um die erste Schwingungsmode modenselektiv anzuregen und diese wird direkt oder über das Fluid zum ersten Schwingungswandler 5 geführt, um dort in Schritt S4 zweite Messdaten zu erfassen.

Der bisherige Verfahrensablauf entspricht einem Messverfahren, wie es beispielsweise zur Bestimmung einer Durchflussgeschwindigkeit und somit auch einer Durchflussmenge genutzt werden kann. Hierzu wäre es beispielsweise ausreichend, als erste und zweite Messdaten jeweils Laufzeiten der sich durch das Fluid ausbreitenden geführten Welle, also die Zeit zwischen einer Anregung am Schwingungswandler 5, 6 und einem Empfang am jeweils anderen Schwingungswandler 5, 6, zu erfassen. Die Differenz dieser Laufzeiten hängt von der Durchflussgeschwindigkeit ab, womit die Durchflussgeschwindigkeit aus der Differenz bestimmt werden kann. Ein entsprechendes Vorgehen ist im Stand der Technik prinzipiell bekannt.

Um jedoch zusätzliche Informationen über das Fluid und/oder Informationen über den Zustand der Messeinrichtung zu gewinnen, erfolgt in Schritt S5 ein Wechsel der genutzten Schwingungsmode. Beispielsweise kann die mit Bezug auf Fig. 2 erläuterte Schalteinrichtung 27 genutzt werden, um zwischen einer normalen und einer invertierten Ansteuerung wenigstens eines Schwingelements des jeweiligen Schwingwandlers 5, 6 umzuschalten. Hierbei erfolgt eine entsprechende Umschaltung vorzugsweise auch für den empfangenden Schwingungswandler. Beispielsweise können zum Empfang einer ersten Mode die Signale der Schwingelemente 18, 19 addiert und zum Empfang der zweiten Schwingungsmode subtrahiert werden. Alternativ könnte wie erläutert eine Verzögerungszeit geändert werden, um die angeregte bzw. empfangene Mode zu wechseln.

Die Schritte S6 bis S9 entsprechen wiederum den Schritten S1 bis S4, wobei in den Schritten S6 bzw. S8 der Schwingungswandler 5 bzw. 6 zur Anregung der zweiten Schwingungsmode angeregt wird, womit in den Schritten S7 und S9 auch Messdaten bezüglich der zweiten Schwingmode für die erste bzw. zweite Messrichtung ermittelt werden.

Somit liegen in Schritt S10 insgesamt vier Sätze von Messdaten vor. Bei den Messdaten kann es sich, wie bereits erläutert, im einfachsten Fall um reine Signallaufzeiten handeln. Alternativ oder ergänzend können als Messdaten auch die Schwingungsamplituden der jeweiligen empfangenen Schwingung berücksichtigt werden. Prinzipiell ist es auch möglich, als Messdaten jeweils den gesamten Verlauf der empfangenen Schwingung, beispielsweise ein digitalisiertes Signal des jeweiligen Schwingungswandlers 5, 6 zu nutzen. Aus diesen Messdaten kann in Schritt S10 eine Ergebnisinformation ermittelt werden, die eine Eigenschaft des Fluids, also beispielsweise eine Temperatur, einen statischen Druck oder eine Art oder eine Zusammensetzung des Fluids, und/oder den Zustand der Messeinrichtung, beispielsweise eine Belegung des Messrohrs durch Ablagerungen, betrifft. Hierzu kann beispielsweise zunächst ein Unterschied der Signallaufzeiten zwischen der ersten und zweiten Messrichtung für jede der Schwingungsmoden ermittelt werden und die Ergebnisinformation kann, beispielsweise anhand einer Lookup-Tabelle, in Abhängigkeit der Differenz oder des Verhältnisses dieser Unterschiede ermittelt werden. Hochgradig relevante Informationen, von denen die Ergebnisinformation abhängen kann, sind auch die Differenzen bzw. die Verhältnisse der Signallaufzeiten oder Empfangsamplituden für die verschiedenen Schwingungsmoden bei gleicher Messrichtung.

Insbesondere dann, wenn komplexe Messdaten, beispielsweise ein digitalisierter Schwingungsverlauf, berücksichtigt werden sollen, kann es vorteilhaft sein, wenn in Schritt S10 ein Algorithmus genutzt wird, der durch ein Verfahren des Maschinenlernens trainiert wurde. Durch vorangehende Trainingsmessungen, bei denen die entsprechenden Messdaten jeweils bei einer vorab bekannten Ergebnisinformation ermittelt werden, kann ein solcher Algorithmus auch dazu trainiert werden, zunächst schwer erkennbare Zusammenhänge zwischen den Messdaten und den Ergebnisinformationen zu erkennen und zu erlernen.

Fig. 4 zeigt eine alternative Ausführungsform des Schwingungswandlers 5, die statt der mit Bezug auf Fig. 2 erläuterten Ausführungsform genutzt werden könnte. Während die in Fig. 2 gezeigte Ausführungsform im Wesentlichen ebene Wellenfronten erzeugt, kann es, beispielsweise bei sehr breiten Seitenwänden, vorteilhaft sein, eine weitgehend isotrope Abstrahlung der geführten Welle zu erreichen, so dass der Schwingungswandler 5 als eine Punktquelle wirkt. Es können auch mehrere der in Fig. 4 gezeigten Anordnungen, beispielsweise entlang einer Linie, genutzt werden, um durch mehrere effektive Punktstrahler zumindest im Fernfeld eine im Wesentlichen ebene Wellenfront erreichen zu können.

Um eine weitgehend isotrope Abstrahlung zu erreichen, sind die Schwingungswandler 30 auf einem ersten Kreis 31 und die Schwingungswandler 33 auf einem zweiten Kreis 34 angeordnet, wobei beide Kreise das gleiche Zentrum 32 aufweisen. Der Abstand 35 zwischen den Kreisen 31, 34 kann so gewählt werden, wie zu Fig. 2 bezüglich dem Abstand 20 der Mitten der Anregungsbereiche 16, 17 erläutert wurde. Werden die Schwingelemente 30 angesteuert, wie zu den Schwingelementen 18 erläutert wurde und die Schwingelemente 33, wie zu den Schwingelementen 19 erläutert wurde, resultiert näherungsweise eine modenreine isotrope Abstrahlung der jeweiligen gewünschten Schwingungsmode.

Die Isotropie könnte weiter verbessert werden, wenn statt den kreissegmentförmigen Schwingelementen 30, 33 durchgängige Kreise als Schwingelemente genutzt würden. Die in Fig. 4 gezeigte Nutzung kleinerer Kreiselemente ermöglicht jedoch eine einfachere Herstellung, da großflächige Keramikteile im Rahmen der Herstellung mit großer Vorsicht gehandhabt werden müssen, um eine Beschädigung zu vermeiden.

In einem nicht gezeigten Ausführungsbeispiel könnte zudem von der gezeigten Kreisform abgewichen werde, beispielsweise indem statt den Kreisen 31, 34 Ellipsen genutzt würden.

### Bezugszeichenliste

- 1: Messeinrichtung
- 2: Steuereinrichtung
- 3: Messrohr
- 4: Innenraum
- 5: Schwingungswandler
- 6: Schwingungswandler
- 7: Pfeil
- 8: Ultraschallstrahl
- 9: Seitenwand
- 10: Dicke
- 11: Pfeil
- 12: Seitenwand
- 13: Pfeil
- 14: Rayleigh-Winkel
- 15: Schwingungswandler
- 16: Anregungsbereich
- 17: Anregungsbereich
- 18: Schwingelement
- 19: Schwingelement
- 20: Abstand
- 21: Mitte
- 22: Mitte
- 23: Ausbreitungsrichtung
- 24: Ausbreitungsrichtung
- 25: Wellenlänge
- 26: Wellenlänge
- 27: Schalteinrichtung
- 28: Inverterschaltung
- 29: Verzögerungselement
- 30: Schwingelement
- 31: Kreis
- 32: Zentrum
- 33: Schwingelement
- 34: Kreis
- 35: Abstand

- S1 - S10: Schritt

## Patentansprüche

1. Verfahren zum Betrieb einer Messeinrichtung, insbesondere eines Durchflusszählers, die ein Messrohr (3), das zur Aufnahme oder Führung eines Fluids dient, einen an einer oder einer jeweiligen Seitenwand (9) des Messrohrs (3) angeordneten ersten und zweiten Schwingungswandler (5, 6) und eine Steuereinrichtung (2) aufweist, wobei die Steuereinrichtung (2) für eine erste Messrichtung den ersten Schwingungswandler (5) zeitlich nacheinander zur jeweils modenselektiven Anregung einer ersten und einer zweiten Schwingungsmode einer in der Seitenwand (9) des Messrohrs (3) geführten Welle ansteuert und für eine zweite Messrichtung den zweiten Schwingungswandler (6) zeitlich nacheinander zur jeweils modenselektiven Anregung einer ersten und einer zweiten Schwingungsmode einer in der Seitenwand (9) des Messrohrs (3) geführten Welle ansteuert, wobei die angeregten Wellen jeweils direkt in der Seitenwand (9) oder indirekt über das Fluid zu dem jeweils anderen Schwingungswandler (5, 6) geführt und dort zur Ermittlung von jeweiligen Messdaten für die jeweilige Messrichtung und Schwingungsmode erfasst werden, wobei durch die Steuereinrichtung (2) eine eine Eigenschaft des Fluid oder einen Zustand der Messeinrichtung (1) betreffende Ergebnisinformation aus den Messdaten für beide Messrichtungen und beide jeweilige Schwingungsmoden ermittelt wird, wobei zunächst eine modenselektive Anregung der ersten Schwingungsmode durch den ersten und zweiten Schwingungswandler (5, 6) und eine Erfassung von Messwerten für die erste Schwingungsmode für beide Messrichtungen und danach eine modenselektive Anregung der zweiten Schwingungsmode durch den ersten und zweiten Schwingungswandler (5, 6) und eine Erfassung von Messwerten für die zweite Schwingungsmode für beide Messrichtungen erfolgt.

2. Verfahren nach Anspruch 1, **dadurch gekennzeichnet, dass** als erste und zweite Schwingungsmode Schwingungsmoden mit gleicher Frequenz angeregt werden und/oder dass die erste und zweite Schwingungsmode Schwingungsmoden einer Lamb-Welle sind.

3. Verfahren nach einem der vorangehenden Ansprüche, **dadurch gekennzeichnet, dass** die Ergebnisinformation eine Temperatur und/oder einen, insbesondere statischen, Druck des Fluids und/oder eine Art und/oder Zusammensetzung des Fluids und/oder das Vorhandensein von Ablagerungen in dem Messrohr (3) betrifft.

4. Verfahren nach einem der vorangehenden Ansprüche, **dadurch gekennzeichnet, dass** die jeweiligen Messdaten eine jeweilige Signallaufzeit der jeweiligen Schwingungsmode für die jeweilige Messrichtung zwischen den Schwingungswandlern (5, 6) und/oder eine Empfangsamplitude für die jeweilige Schwingungsmode und Messrichtung betreffen.

5. Verfahren nach Anspruch 4, **dadurch gekennzeichnet, dass** für die erste und zweite Schwingungsmode jeweils ein Unterschied der Signallaufzeiten zwischen der ersten und zweiten Messrichtung ermittelt wird, wobei die Ergebnisinformation in Abhängigkeit der Differenz oder des Verhältnisses dieser Unterschiede der Signallaufzeiten ermittelt wird, und/oder wobei die Ergebnisinformation in Abhängigkeit einer Differenz oder eines Verhältnisses der Signallaufzeiten oder Empfangsamplituden zwischen der ersten und der zweiten Schwingungsmode bei gleicher Messrichtung ermittelt wird.

6. Verfahren nach einem der vorangehenden Ansprüche, **dadurch gekennzeichnet, dass** der erste und/oder zweite Schwingungswandler (5, 6) jeweils mehrere Schwingelemente (18, 19, 30, 33) umfassen, wobei die modenselektive Anregung der ersten und/oder zweiten Schwingungsmode erfolgt, indem in mehreren voneinander beabstandeten Anregungsbereichen (16, 17) der Seitenwand (9) durch wenigstens eines der Schwingelemente (18, 19, 30, 33), das mit dem jeweiligen Anregungsbereich (16, 17) schwingungsgekoppelt ist, in der Seitenwand (9) geführte Teilwellen angeregt werden, die sich zu der jeweiligen geführten Welle überlagern, wobei die Schwingelemente (18, 19, 30, 33) derart angesteuert werden, dass die jeweils andere Schwingungsmode durch eine destruktive Interferenz der Teilwellen zumindest teilweise ausgelöscht wird.

7. Verfahren nach Anspruch 6, **dadurch gekennzeichnet, dass** die Anregung der Schwingelemente (18, 19, 30, 33) derart erfolgt, dass die Schwingungsmuster eines ersten und eines zweiten der Schwingelemente (18, 19, 30, 33) einander mit einer vorgegebenen relativen Polarität und/oder einem vorgegebenen relativen Phasenversatz entsprechen, wobei sich die zur modenselektiven Anregung der ersten Schwingungsmode und zur modenselektiven Anregung der zweiten Schwingungsmode genutzten vorgegebenen relativen Polaritäten und/oder Phasenversätze voneinander unterscheiden.

8. Verfahren nach Anspruch 6 oder 7, **dadurch gekennzeichnet, dass** zur modenselektiven Anregung der ersten und/oder zweiten Schwingungsmode ein erstes und ein zweites der Schwingelemente (18, 19, 30, 33) derart angesteuert werden, dass der zeitliche Verlauf der Schwingungsamplitude des zweiten Schwingelements dem um eine Verzögerungszeit verzögerten zeitlichen Verlauf der Schwingungsamplitude des ersten Schwingelements entspricht.

9. Verfahren nach einem der vorangehenden Ansprüche, **dadurch gekennzeichnet, dass** zusätzlich für wenigstens eine der Messrichtungen eine weitere Mode der in der Seitenwand (9) des Messrohrs (3) geführten Welle modenselektiv durch einen der Schwingungswandler (5, 6) angeregt und direkt in der Seitenwand (9) oder indirekt über das Fluid zu dem anderen Schwingungswandler (5, 6) geführt und dort zur Ermittlung von weiteren Messdaten für die weitere Schwingungsmode erfasst wird, wobei die Schwingungsfrequenz der weiteren Mode sich von der Schwingungsfrequenz der ersten und/oder zweiten Mode unterscheidet, wobei die Ergebnisinformation in Abhängigkeit der weiteren Messdaten ermittelt wird.

10. Verfahren nach einem der vorangehenden Ansprüche, **dadurch gekennzeichnet, dass** die Ergebnisinformation durch einen Algorithmus aus den Messdaten ermittelt wird, der durch ein Verfahren des Maschinenlernens trainiert ist oder wird.

11. Messeinrichtung, insbesondere Durchflussmesser, mit einem Messrohr (3), das zur Aufnahme oder zur Führung eines Fluids dient, einem an einer oder einer jeweiligen Seitenwand (9) des Messrohrs (3) angeordneten ersten und zweiten Schwingungswandler(5, 6) und einer Steuereinrichtung (2), **dadurch gekennzeichnet, dass** die Steuereinrichtung (2) zur Durchführung des Verfahrens nach einem der vorangehenden Ansprüche eingerichtet ist.

## Claims

1. Method for operating a measuring device, in particular a flow meter, which has a measurement tube (3) that is used to receive or convey a fluid, a first and second oscillation transducer (5, 6) arranged on one or a respective side wall (9) of the measurement tube (3), and a control device (2), wherein the control device (2), for a first measurement direction, actuates the first oscillation transducer (5) in temporal succession for respective mode-selective excitation of a first and a second oscillation mode of a wave conducted in the side wall (9) of the measurement tube (3) and, for a second measurement direction, actuates the second oscillation transducer (6) in temporal succession for respective mode-selective excitation of a first and a second oscillation mode of a wave conducted in the side wall (9) of the measurement tube (3), wherein the excited waves are respectively conducted directly in the side wall (9) or indirectly through the fluid to the respective other oscillation transducer (5, 6) and are captured there in order to ascertain respective measurement data for the respective measurement direction and oscillation mode, wherein result information that relates to a property of the fluid or a state of the measuring device (1) is ascertained by the control device (2) from the measurement data for both measurement directions and both respective oscillation modes, wherein initially mode-selective excitation of the first oscillation mode is performed by the first and second oscillation transducers (5, 6) and capturing of measurement values for the first oscillation mode for both measurement directions is performed, and then mode-selective excitation of the second oscillation mode is performed by the first and second oscillation transducers (5, 6) and capturing of measurement values for the second oscillation mode is performed for both measurement directions.

2. Method according to Claim 1, **characterized in that** oscillation modes with equal frequency are excited as the first and second oscillation modes, and/or **in that** the first and second oscillation modes are oscillation modes of a Lamb wave.

3. Method according to either of the preceding claims, **characterized in that** the result information relates to a temperature and/or a, in particular static, pressure of the fluid and/or to a type and/or composition of the fluid and/or the presence of deposits in the measurement tube (3).

4. Method according to one of the preceding claims, **characterized in that** the respective measurement data relate to a respective signal time of flight of the respective oscillation mode for the respective measurement direction between the oscillation transducers (5, 6) and/or a reception amplitude for the respective oscillation mode and measurement direction.

5. Method according to Claim 4, **characterized in that** a difference of the signal times of flight between the first and second measurement direction is respectively ascertained for the first and second oscillation modes, wherein the result information is ascertained as a function of the difference or of the ratio of these differences of the signal times of flight, and/or wherein the result information is ascertained as a function of a difference or of a ratio of the signal times of flight or reception amplitudes between the first and second oscillation modes for the same measurement direction.

6. Method according to one of the preceding claims, **characterized in that** the first and/or second oscillation transducer (5, 6) respectively comprise a plurality of oscillation elements (18, 19, 30, 33), wherein the mode-selective excitation of the first and/or second oscillation mode is performed by partial waves conducted in the side wall (9), which are superimposed to form the respective conducted wave, are excited in a plurality of mutually separated excitation regions (16, 17) of the side wall (9) by at least one of the oscillation elements (18, 19, 30, 33), which is oscillation-coupled to the respective excitation region (16, 17), wherein the oscillation elements (18, 19, 30, 33) are actuated in such a way that the respective other oscillation mode is at least partially cancelled by destructive interference of the partial waves.

7. Method according to Claim 6, **characterized in that** the excitation of the oscillation elements (18, 19, 30, 33) is performed in such a way that the oscillation patterns of a first and a second of the oscillation elements (18, 19, 30, 33) correspond to one another with a specified relative polarity and/or a specified relative phase shift, wherein the specified relative polarities and/or phase shifts used for the mode-selective excitation of the first oscillation mode and for the mode-selective excitation of the second oscillation mode differ from one another.

8. Method according to Claim 6 or 7, **characterized in that**, for the mode-selective excitation of the first and/or second oscillation mode, a first and a second of the oscillation elements (18, 19, 30, 33) are actuated in such a way that the time profile of the oscillation amplitude of the second oscillation element corresponds to the time profile of the oscillation amplitude of the first oscillation element delayed by a delay time.

9. Method according to one of the preceding claims, **characterized in that**, additionally for at least one of the measurement directions, a further mode of the wave conducted in the side wall (9) of the measurement tube (3) is excited mode-selectively by one of the oscillation transducers (5, 6) and is conducted directly in the side wall (9) or indirectly through the fluid to the other oscillation transducer (5, 6) and is captured there in order to ascertain further measurement data for the further oscillation mode, wherein the oscillation frequency of the further mode differs from the oscillation frequency of the first and/or second mode, wherein the result information is ascertained as a function of the further measurement data.

10. Method according to one of the preceding claims, **characterized in that** the result information is ascertained from the measurement data by an algorithm, which has been or is trained by a machine learning method.

11. Measuring device, in particular flow meter, having a measurement tube (3) that is used to receive or convey a fluid, a first and second oscillation transducer (5, 6) arranged on one or a respective side wall (9) of the measurement tube (3), and a control device (2), **characterized in that** the control device (2) is configured for performing the method according to one of the preceding claims.

## Revendications

1. Procédé pour faire fonctionner un dispositif de mesure, notamment un débitmètre, qui possède un tube de mesure (3), lequel sert à accueillir ou à conduire un fluide, un premier et un deuxième convertisseur d'oscillations (5, 6) disposé au niveau d'une paroi latérale (9) ou d'une paroi latérale respective du tube de mesure (3) et un dispositif de commande (2), le dispositif de commande (2) commandant, pour une première direction de mesure du premier convertisseur d'oscillations (5), une onde guidée dans la paroi latérale (9) du tube de mesure (3) successivement dans le temps en vue d'une excitation respectivement sélective en mode d'un premier et d'un deuxième mode d'oscillation et, pour une deuxième direction de mesure du deuxième convertisseur d'oscillations (6), une onde guidée dans la paroi latérale (9) du tube de mesure (3) successivement dans le temps en vue d'une excitation respectivement sélective en mode d'un premier et d'un deuxième mode d'oscillation, les ondes excitées étant respectivement guidées directement dans la paroi latérale (9) ou indirectement par le biais du fluide vers l'autre convertisseur d'oscillations (5, 6) respectif et y sont détectées en vue de déterminer des données de mesure respectives pour la direction de mesure et le mode d'oscillation respectifs, une information de résultat concernant une propriété du fluide ou un état du dispositif de mesure (1) étant déterminé par le dispositif de commande (2) à partir des données de mesure pour les deux directions de mesure et les deux modes d'oscillation respectifs, une excitation sélective en mode du premier mode d'oscillation par le premier et le deuxième convertisseur d'oscillations (5, 6) ainsi qu'une détection de valeurs mesurées pour le premier mode d'oscillation pour les deux directions de mesure étant tout d'abord effectuées, et ensuite une excitation sélective en mode du deuxième mode d'oscillation par le premier et le deuxième convertisseur d'oscillations (5, 6) ainsi qu'une détection de valeurs mesurées pour le deuxième mode d'oscillation pour les deux directions de mesure.

2. Procédé selon la revendication 1, **caractérisé en ce que** des modes d'oscillation ayant la même fréquence sont excités en tant que premier et deuxième modes d'oscillation et/ou **en ce que** le premier et le deuxième mode d'oscillation sont des modes d'oscillation d'une onde de Lamb.

3. Procédé selon l'une des revendications précédentes, **caractérisé en ce que** l'information de résultat concerne une température et/ou une pression, notamment statique, du fluide et/ou une nature et/ou une composition du fluide et/ou la présence de dépôts dans le tube de mesure (3) .

4. Procédé selon l'une des revendications précédentes, **caractérisé en ce que** les données de mesure respectives concernent un temps de propagation respectif du mode d'oscillation respectif pour la direction de mesure respective entre les convertisseurs d'oscillations (5, 6) et/ou une amplitude de réception pour le mode d'oscillation et la direction de mesure respectifs.

5. Procédé selon la revendication 4, **caractérisé en ce qu'**une différence des temps de propagation du signal entre la première et la deuxième direction de mesure est respectivement déterminée pour le premier et le deuxième mode d'oscillation, l'information de résultat étant déterminée en fonction de la différence ou du rapport de ces différences des temps de propagation du signal, et/ou l'information de résultat étant déterminée en fonction d'une différence ou d'un rapport des temps de propagation du signal ou des amplitudes de réception entre le premier et le deuxième mode d'oscillation avec la même direction de mesure.

6. Procédé selon l'une des revendications précédentes, **caractérisé en ce que** le premier et/ou le deuxième convertisseur d'oscillations (5, 6) comportent respectivement plusieurs éléments oscillants (18, 19, 30, 33), l'excitation sélective en mode du premier et/ou du deuxième mode d'oscillation s'effectuant en excitant des ondes partielles, qui se superposent en l'onde guidée respective, guidées dans la paroi latérale (9) dans plusieurs zones d'excitation (16, 17) espacées les unes des autres de la paroi latérale (9) par au moins l'un des éléments oscillants (18, 19, 30, 33) respectifs, lequel est couplé à la zone d'excitation (16, 17) respective, les éléments oscillants (18, 19, 30, 33) étant commandés de telle sorte que l'autre mode d'oscillation respectif est effacé au moins partiellement par une interférence destructrice des ondes partielles.

7. Procédé selon la revendication 6, **caractérisé en ce que** l'excitation des éléments oscillants (18, 19, 30, 33) est effectuée de telle sorte que le modèle d'oscillation d'un premier et d'un deuxième des éléments oscillants (18, 19, 30, 33) correspondent l'un à l'autre avec une polarité relative prédéfinie et/ou un déphasage relatif prédéfini, les polarités et/ou les déphasages relatifs prédéfinis utilisés pour l'excitation sélective en mode du premier mode d'oscillation et pour l'excitation sélective en mode du deuxième mode d'oscillation étant différents l'un de l'autre.

8. Procédé selon la revendication 6 ou 7, **caractérisé en ce qu'**en vue de l'excitation sélective en mode du premier et/ou du deuxième mode d'oscillation, un premier et un deuxième des éléments oscillants (18, 19, 30, 33) sont commandés de telle sorte que la courbe dans le temps de l'amplitude d'oscillation du deuxième élément oscillation correspond à la courbe dans le temps de l'amplitude d'oscillation du premier élément oscillation retardée d'un temps de retard.

9. Procédé selon l'une des revendications précédentes, **caractérisé en ce qu'**un mode supplémentaire de l'onde guidée dans la paroi latérale (9) du tube de mesure (3) est excité de manière sélective en mode par l'un des convertisseurs d'oscillations (5, 6) en plus pour au moins l'une des directions de mesure, puis guidé directement dans la paroi latérale (9) ou indirectement par le biais du fluide vers l'autre convertisseur d'oscillations (5, 6) et y est détecté en vue de déterminer des données de mesure supplémentaires pour le mode d'oscillation supplémentaire, la fréquence d'oscillation du mode supplémentaire étant différente de la fréquence d'oscillation du premier et/ou du deuxième mode, l'information de résultat étant déterminée en fonction des données de mesure supplémentaires.

10. Procédé selon l'une des revendications précédentes, **caractérisé en ce que** l'information de résultat est déterminée par un algorithme à partir des données de mesure, lequel est ou sera entraîné par un procédé d'apprentissage automatique.

11. Dispositif de mesure, notamment débitmètre, comprenant un tube de mesure (3), lequel sert à accueillir ou à conduire un fluide, un premier et un deuxième convertisseur d'oscillations (5, 6) disposé au niveau d'une paroi latérale (9) ou d'une paroi latérale respective du tube de mesure (3) et un dispositif de commande (2), **caractérisé en ce que** le dispositif de commande (2) est conçu pour mettre en œuvre un procédé selon l'une des revendications précédentes.
